# FASCICULE DE BREVET EUROPEEN

(11) **EP 2 861 336 B1**
(45) Date de publication et mention de la délivrance du brevet: **03.08.2016**
(21) Numéro de dépôt: 13733402.5
(22) Date de dépôt: 13.06.2013
(51) Int. Cl.: B01J 8/00

(54) **DISTRIBUTION DE PARTICULES SOLIDES DANS UN REACTEUR**
VERTEILEN VON FESTEN TEILCHEN IN EINEM REAKTOR
DISTRIBUTION OF SOLID PARTICLES IN A REACTOR

(30) Priorité: 13.06.2012 FR 1255523
(43) Date de publication de la demande: 22.04.2015
(73) Titulaire: TOTAL RAFFINAGE CHIMIE, 92400 Courbevoie (FR)
(72) Inventeur: MAIRESSE, Julien, F-33190 La Reole (FR); BERRIC, Guillaume, F-76290 Fontaine-la-Mallet (FR)
(74) Mandataire: Radault, Gabrielle
(86) Numéro de dépôt international: PCT/FR2013/051387
(87) Numéro de publication internationale: WO 2013/186497

(56) Documents cités:
- WO-A1-2008/047050
- FR-A1- 2 923 816
- FR-A1- 2 949 755

## Description

L'invention concerne la distribution de particules solides dans une enceinte, et en particulier dans un réacteur.

Il est connu de charger des réacteurs, notamment de type chimique, électrochimique, pétrolier ou pétrochimique, avec des particules solides à l'état divisé. Ces particules peuvent par exemple se présenter sous forme de billes, de grains, de cylindres, de pastilles, de bâtonnets ou de toute autre forme et ont en général des dimensions relativement faibles.

Les particules peuvent être en particulier des grains de catalyseurs solides, généralement extrudés réalisés soit sous forme régulière, soit sous forme de bâtonnets mono ou multilobes, dont les dimensions peuvent varier selon les cas de quelques dixièmes de millimètres à quelques centimètres.

C'est à cette application, dite de « chargement dense », de grains de catalyseurs dans un réacteur chimique que l'on se référera plus particulièrement dans la suite de la présente description. Mais le dispositif décrit peut plus généralement trouver des applications dans le cadre d'un chargement de particules solides dans un réacteur ou autre enceinte cylindrique.

Par « chargement dense » on entend un chargement par effet de pluie optimisé afin de permettre de charger dans un minimum d'espace et en un minimum de temps un maximum de particules solides de façon homogène et la plus uniforme possible.

Le document WO 2010/076522 (Cottard et al.) décrit un exemple de dispositif de distribution de particules solides dans une enceinte.

Ce dispositif de distribution est installé dans une ouverture de remplissage du réacteur situé en haut du réacteur et au centre du réacteur.

Afin de mesurer le niveau de particules solides déjà tombées dans le réacteur, on peut disposer une ou plusieurs sondes (ou capteurs) de mesure à l'intérieur du réacteur, en particulier pendant le remplissage. Plus généralement, on installe des sondes à l'intérieur du réacteur afin de mesurer des paramètres relatifs au suivi du chargement des particules solides dans l'enceinte.

L'installation dans le réacteur d'un tel système de distribution, incluant notamment le dispositif de distribution et les supports de sonde, peut néanmoins être relativement délicate à effectuer. L'une des contraintes principales à laquelle les opérateurs de ce type de matériel peuvent être confrontés est liée à l'encombrement interne parfois extrême d'un réacteur qui peut contenir des plateaux, des thermocouples et des supports pour ces éléments. Cette contrainte est donc liée au faible espace dont les opérateurs disposent pour manoeuvrer le dispositif de distribution en vue de son installation et de ses réglages.

Il existe un besoin pour davantage de souplesse dans le positionnement du système de distribution de particules solides dans une enceinte.

Il est proposé un système de distribution de particules solides pour charger en particules solides une enceinte, par exemple un réacteur. Ce système comprend :
- un dispositif de maintien d'un dispositif de chargement en particules solides, ce dispositif de maintien étant agencé pour assurer le maintien du dispositif de chargement dans l'enceinte,
- un dispositif support de capteur, ce capteur étant destiné à la collecte d'informations sur le chargement de l'enceinte.

Le système de distribution de particules solides est agencé de sorte que le dispositif de maintien et le dispositif support de capteur puissent être montés sur le dispositif de chargement de particules solides tout en étant déplaçables par rapport à ce dispositif de chargement.

Ainsi, une telle liberté de positionnement de dispositif support de capteur et du dispositif de maintien peut permettre de s'affranchir, au moins en partie, des contraintes liées à l'environnement dans le réacteur, et notamment liées à l'encombrement des internes de réacteur, en termes de thermocouples ou autre.

Un tel arrangement peut permettre de réduire la durée de l'installation de ce système de distribution de particules solides dans le réacteur. Ceci peut être particulièrement intéressant pour une application industrielle, par exemple en raffinerie, car réduire le temps d'arrêt d'une unité qu'on doit charger ou recharger en catalyseur peut permettre des économies considérables.

En outre, de par cette faculté de positionnement par rapport au dispositif de chargement en particules solides, cet arrangement peut être plus facilement adapté à l'environnement que dans l'art antérieur. En outre, la fiabilité de l'installation peut s'en trouver renforcée du fait que le dispositif de distribution, une fois mis en place, est maintenu fixe dans le réacteur de manière plus sûre.

Cette possibilité de déplacement du dispositif support de capteur peut en outre permettre d'ajuster la position du ou des capteurs en fonction des données à recueillir. Par exemple, pour un réacteur de diamètre élevé, on pourra déporter radialement le capteur davantage que pour un réacteur de diamètre plus faible.

Le dispositif de maintien et/ou le dispositif support de capteur peuvent être montés directement sur le dispositif de chargement, ou bien indirectement, c'est-à-dire par l'intermédiaire d'une ou plusieurs autres pièces.

De manière générale, dans la présente demande, par « sur », on entend aussi bien « directement sur » qu' « indirectement sur ».

Le dispositif de maintien et/ou le dispositif support de capteur peuvent être amovibles, c'est-à-dire que la liaison entre l'un et/ou l'autre de ces dispositifs et le dispositif de chargement peut être facilement défaite par un opérateur, de façon à permettre un retrait alors que le dispositif de chargement est toujours dans le réacteur, ou bien inamovibles, c'est-à-dire que cette liaison ne peut pas être défaite ou bien que défaire cette liaison implique un déverrouillage.

L'invention n'est en rien limitée par le type ni par la ou les direction(s) du ou des mouvement(s) autorisé(s). On peut par exemple prévoir un système de distribution de particules solides agencé pour autoriser :
- les déplacements en hauteur, c'est-à-dire suivant un axe longitudinal du système de chargement, cet axe longitudinal étant parallèle ou sensiblement parallèle à la direction du vecteur gravité lorsque le système est installé dans un réacteur,
- les déplacements de rotation autour de cet axe longitudinal,
- les déplacements radiaux par rapport à cet axe longitudinal, et/ou
- autre,
du dispositif support de capteur et/ou du dispositif de maintien par rapport au dispositif de chargement.

L'invention n'est pas non plus limitée par la façon dont le dispositif de maintien et le dispositif support de capteur sont montés sur le dispositif de chargement.

Le système de distribution peut par exemple comprendre des pinces solidarisées au dispositif de chargement, au dispositif support de capteur et/ou au dispositif de maintien, pour la fixation du dispositif de maintien et/ou du dispositif support de capteur au dispositif de chargement.

On pourra alternativement prévoir des moyens de clipsage, des systèmes de rails en forme de queue d'aronde, ou autre.

Avantageusement et de façon non limitative, le système de distribution peut comprendre un élément de support solidaire du dispositif de chargement. Le système de distribution peut être agencé de sorte que cet élément de support soit apte à supporter le dispositif support de capteur, et/ou le dispositif de maintien tout en autorisant le ou les déplacement(s) relatif(s) de ce dispositif support de capteur et/ou de ce dispositif de maintien par rapport à cet élément de support.

Cet élément de support, solidarisé au dispositif de chargement, peut être suffisamment compact de façon à ne pas gêner l'introduction du dispositif de chargement dans le réacteur. Par exemple l'épaisseur suivant une direction radiale de cet élément de support peut être inférieure à 10 centimètres, avantageusement inférieure à 5 centimètres, avantageusement proche de 3 ou 4 centimètres.

Avantageusement et de façon non limitative, les déplacements autorisés du dispositif support de capteur et/ou du dispositif de maintien peuvent être continus par rapport à l'élément de support.

Avantageusement et de façon non limitative, le dispositif support de capteur et/ou le dispositif de maintien peuvent former avec l'élément support une liaison glissière.

Les déplacements lors de l'installation du système peuvent ainsi être relativement faciles à effectuer pour un opérateur.

Par exemple, l'élément de support peut former un rail sur lequel le dispositif support de capteur et/ou le dispositif de maintien peuvent coulisser.

Alternativement, on pourrait prévoir un autre type de liaison non-rigide, par exemple une liaison rotule, annulaire, ou autre.

L'élément de support peut être d'une seule pièce avec le dispositif de chargement, ou avoir été fixé à ce dispositif de chargement, par exemple au moyen de vis, ou autre.

L'invention n'est en rien limitée par la manière dont l'élément de support est solidarisé au dispositif de chargement.

Par exemple, l'élément de support peut comprendre une couronne de forme arrondie, par exemple circulaire, solidarisée au dispositif de chargement et agencée de façon à supporter le dispositif de maintien et/ou le dispositif support de capteur de sorte que ce dispositif de maintien et/ou dispositif support de capteur puisse coulisser sur cette couronne circulaire, et donc autour du dispositif de chargement.

On peut prévoir plusieurs éléments de support, par exemple une couronne circulaire pour supporter le dispositif support de capteur et une autre couronne circulaire pour supporter le dispositif de maintien. Mais avantageusement, on prévoira une seule couronne circulaire, à des fins de simplicité et de légèreté.

Avantageusement et de façon non limitative, le système de distribution de particules solides peut comprendre une (ou plusieurs) platine de fixation solidarisée au dispositif de maintien ou au dispositif support de capteur. Cette platine de fixation, montée coulissante sur l'élément de support, constitue en quelques sortes un élément d'adaptation du dispositif de maintien ou du dispositif support de capteur à l'élément support.

Avantageusement et de façon non limitative, le système de distribution de particules solides peut comprendre des moyens de réglage en hauteur du dispositif support de capteur et/ou des moyens de réglage en hauteur du dispositif de maintien.

Un réglage en hauteur du dispositif support de capteur peut permettre d'ajuster la hauteur du capteur, afin notamment de mieux s'adapter au profil de chargement attendu ou mesuré.

Un réglage en hauteur du dispositif de maintien peut permettre d'ajuster la position verticale du système de distribution, et notamment de s'adapter à diverses épaisseurs de plateau interne au réacteur.

Avantageusement et de façon non limitative, le système peut comprendre des moyens de réglage de l'inclinaison. Avantageusement, ces moyens de réglage de l'inclinaison peuvent être agencés pour modifier la hauteur d'une partie au moins du dispositif de maintien. On pourra par exemple prévoir des bras ayant à leurs extrémités des moyens pour se poser sur un support, par exemple des pieds rotulés, ces moyens étant ajustables en hauteur, par exemple au moyen d'une tige filetée ou autre.

Un tel réglage de l'inclinaison peut notamment permettre d'ajuster l'horizontalité du système de distribution une fois installé dans le réacteur.

Avantageusement et de façon non limitative, le système de distribution de particules solides peut comprendre en outre un dispositif de mesure d'angle, par exemple un capteur de niveau à bulles. Un tel dispositif de mesure d'angle peut aider au positionnement du dispositif de chargement dans le réacteur.

Avantageusement et de façon non limitative, le dispositif support de capteur et/ou le dispositif de maintien peuvent être fixés à l'élément de support de façon inamovible. Dit autrement, cette fixation interdit le retrait du dispositif support de capteur et/ou du dispositif de maintien par simple traction de ces dispositifs.

Avantageusement et de façon non limitative, le système de distribution de particules solides peut comprendre des moyens de verrouillage pour assurer la fixation du dispositif support de capteur et/ou du dispositif de maintien à l'élément de support. On pourra par exemple prévoir un doigt de fermeture apte à pivoter autour d'un axe ou bien à coulisser suivant la direction longitudinale par exemple, de façon à pouvoir verrouiller le dispositif support de capteur (ou respectivement le dispositif de maintien) autour de l'élément de support.

Le dispositif support de capteur et/ou le dispositif de maintien peuvent être fixés à l'élément de support de façon amovible. On pourra par exemple prévoir de poser l'un et/ou l'autre de ces dispositifs sur l'élément de support et d'autoriser le retrait de ce dispositif par une simple saisie et traction hors de l'élément de support.

Avantageusement et de façon non limitative, le dispositif de maintien peut comprendre des moyens de maintien, destinés à coopérer avec l'environnement, par exemple des pinces, des pieds rotulés, ou autre.

Le dispositif de maintien peut être agencé de sorte que ces moyens de maintien soient déportés latéralement par rapport au dispositif de chargement.

Par exemple, les moyens de maintien peuvent être distants du dispositif de chargement de plusieurs dizaines de centimètres, voire de plusieurs mètres.

Avantageusement et de façon non limitative, le dispositif de maintien peut comporter une tige. Cette tige peut être montée par une extrémité sur le dispositif de chargement tandis que l'autre extrémité est solidarisée au moyen de maintien, par exemple, à un pied rotulé.

Cette tige peut avantageusement comprendre plusieurs parties aptes à coulisser les unes par rapport aux autres, par exemple deux parties aptes à coulisser l'une dans l'autre. La longueur de la tige peut ainsi être ajustable.

Avantageusement et de façon non limitative, le dispositif support de capteur peut être agencé de façon à ce que le capteur soit déporté latéralement par rapport au dispositif de chargement. Par exemple, le ou les capteur(s) peu(ven)t être distants du dispositif de chargement de plusieurs dizaines de centimètres, voire de plusieurs mètres.

Le système peut donc comprendre des éléments d'écartement, par exemple des tiges, des bras, une chaîne boutante, ou autre, s'étendant entre deux extrémités, l'une de ces extrémités étant montée sur le dispositif de chargement et l'autre de ces extrémités étant solidarisée à un moyen de maintien ou à un ou plusieurs capteurs. Le caractère déplaçable des éléments d'écartement peut permettre de concilier facilité d'installation, maintien et qualité de données mesurées.

Avantageusement et de façon non limitative, le dispositif support de capteur peut comprendre un élément de guidage d'une chaîne boutante. Cet élément de guidage peut être conformé pour guider cette chaîne en rotation, par exemple de façon à appliquer un angle proche de 90° ou autre à la chaîne boutante.

Par « proche de 90° », on entend variant entre 45° et 135°, avantageusement entre 70° et 110°, avantageusement entre 80° et 100°, avantageusement entre 89° et 91°. L'angle peut bien entendu être de 90°.

Le système de distribution de particules solides peut avantageusement comprendre en outre le dispositif de chargement.

Le système de distribution peut comprendre un ou plusieurs dispositifs de maintien, et un ou plusieurs dispositifs de support de capteur.

Il est en outre proposé un dispositif support de capteur pour un système de distribution de particules solides dans une enceinte, ce capteur étant destiné à la collecte d'informations sur le chargement de l'enceinte. Ce dispositif support de capteur comprend un élément de guidage d'une chaine boutante, cette chaine étant destinée à supporter le capteur, cet élément de guidage étant conformé pour guider la chaine boutante de sorte qu'une portion de la chaine à une sortie de cet élément de guidage s'étende (selon sa longueur) suivant une direction différente de celle d'une portion de la chaine à l'entrée de l'élément de guidage.

Ainsi, on peut introduire la chaine, dans une entrée de l'élément de guidage, avec un mouvement selon une première direction, et à la sortie de l'élément de guidage, la chaine a un mouvement selon une deuxième direction non parallèle à la première direction, par exemple perpendiculaire à la première direction. L'élément de guidage peut ainsi avoir une forme générale de coude.

La première direction peut par exemple être proche de la direction du vecteur gravité, tandis que la deuxième direction peut être proche d'une direction radiale. Le capteur, placé par exemple à proximité d'une extrémité de la chaine de guidage, peut ainsi être déporté latéralement alors que la chaine est introduite selon un mouvement proche de la verticale.

Il est en outre proposé un procédé d'installation d'un système de distribution de particules solides dans une enceinte, par exemple un réacteur, ce système de distribution de particules solides comprenant un dispositif de maintien agencé pour assurer le maintien d'un dispositif de chargement dans l'enceinte, et un dispositif support de capteur, ce capteur étant destiné à la collecte d'informations sur le chargement de l'enceinte. Le procédé comprend une étape de montage du dispositif support de capteur et du dispositif de maintien sur le dispositif de chargement, et une étape d'ajustement au cours de laquelle on déplace le dispositif support de capteur et le dispositif de maintien par rapport au dispositif de chargement, afin de s'adapter à l'environnement à l'intérieur de l'enceinte, par exemple l'environnement du réacteur et/ou à la forme attendue du profil de chargement du réacteur. Notamment, on pourra prévoir un déplacement fonction du diamètre du réacteur.

Dans la présente demande les termes « haut » « bas » « supérieur « inférieur » « vertical » « horizontal », « latéral » « dessus » « dessous » etc. sont définis au sens classique de ces termes (c'est-à-dire que la direction verticale et la direction du vecteur gravité, ce vecteur gravité étant orienté du haut vers le bas), pour un système de distribution placé dans des conditions normales d'utilisation, c'est-à-dire avec son axe longitudinal orienté suivant la direction du vecteur gravité. Bien entendu, le système est susceptible d'être orienté différemment, notamment lors de son transport.

L'invention sera mieux comprise en référence aux figures, lesquelles illustrent des modes de réalisation non limitatifs.
La figure 1 est une vue en perspective d'un exemple de système de distribution de particules solides selon un mode de réalisation de l'invention.
La figure 2A est une vue en perspective d'une platine d'un exemple de dispositif support de capteur, montée sur un élément de support, pour un système de distribution selon un mode de réalisation de l'invention.
La figure 2B est une autre vue en perspective de cette platine, montée sur un élément de support.
La figure 3 est une vue en perspective d'un exemple de dispositif de maintien, pour un système de distribution selon un mode de réalisation de l'invention.
La figure 4A est une vue en perspective d'un ensemble de guidage et d'une platine d'un dispositif support de capteur, d'un élément de support et d'un fût d'un système de distribution selon un mode de réalisation de l'invention.
La figure 4B est une autre vue (partielle) de l'ensemble de la figure 4A.
La figure 5 est une vue éclatée d'un ensemble de guidage pour un système de distribution selon un mode de réalisation de l'invention.

Des références identiques peuvent être utilisées pour désigner des éléments identiques ou similaires d'une figure à l'autre.

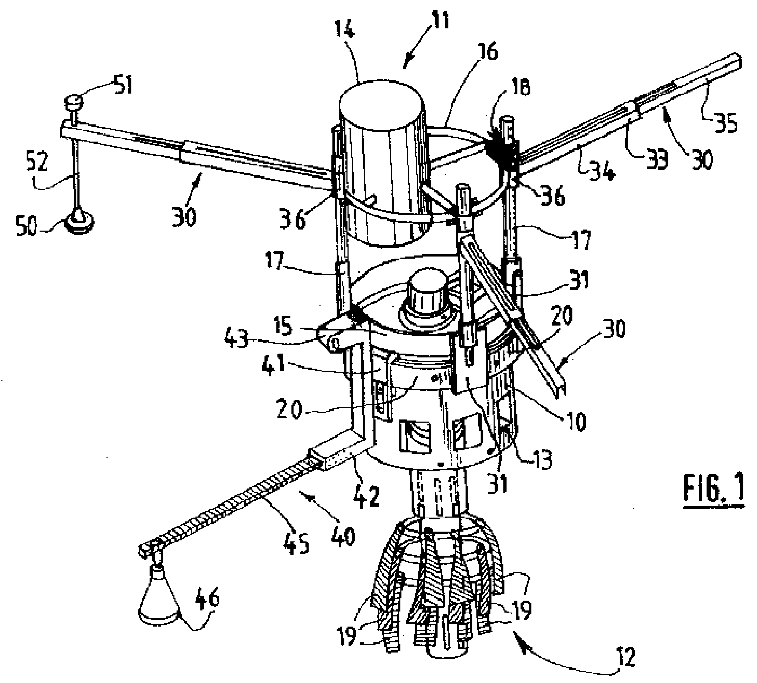

En référence à la figure 1, un système de distribution de particules solides 1 comprend un dispositif de chargement 10 conformé pour introduire des particules solides, par exemple des billes, des extrudés de catalyseur non représentés, ou autre, dans un réacteur non représenté. Ce dispositif de chargement 10 définit un passage pour la circulation de ces particules solides, depuis une entrée 11 jusqu'à une sortie 12.

Dans ce mode de réalisation, des pales 19, par exemple en forme de lanières, disposées à la sortie du dispositif de chargement 10, permettent de mieux répartir les particules solides dans le réacteur.

Le dispositif de chargement 10 comprend un corps principal 13, ou fût, en métal, ainsi qu'une rehausse 14 destinée à l'alimentation en particules solides (non représentée) du dispositif de chargement. Cette rehausse 14 comprend une bague métallique inférieure 15, ainsi qu'une bague métallique supérieure 16. Cette bague supérieure 16 est fixée à un support de bague 18 monté sur des rallonges de pied 17 en métal à forme générale de tube creux.

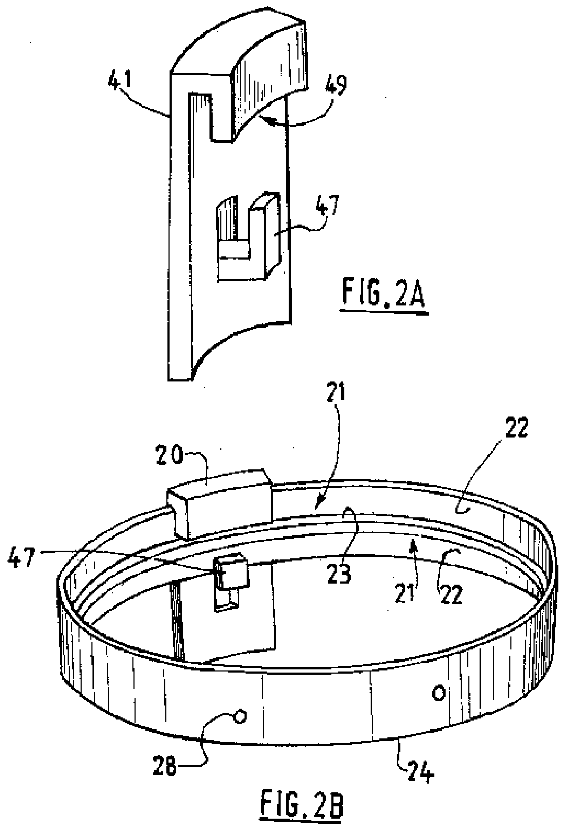

Un élément de support, ici en forme de couronne métallique circulaire 20, est monté sur le dispositif de chargement 10. Cette couronne 20 est solidarisée au dispositif de chargement 10 par vissage via des orifices (référencés 28 sur la figure 2B).

Comme le montre le détail de la figure 2B, la couronne circulaire 20 a une forme telle que lorsque cette couronne 20 est fixée sur un dispositif à forme générale de cylindre, des évidements 21 sont définis entre des surfaces internes 22 de la couronne 20 et le cylindre.

La couronne circulaire 20 comprend en effet une saillie 23, de section carrée ou rectangulaire, destinée à être en contact avec la surface externe du dispositif de chargement à forme générale de cylindre.

Des éléments de fixation peuvent être introduits dans ces évidements 21, de façon à permettre de fixer des dispositifs de maintien du système de distribution dans le réacteur et des dispositifs support de capteurs, ces capteurs permettant de collecter des informations pendant le chargement du réacteur.

Pour revenir à la figure 1, le système de distribution comprend trois dispositifs de maintien 30 montés sur la couronne circulaire 20. Chacun de ces dispositifs de maintien comprend une platine de fixation 31 montée sur la couronne circulaire et supportant une rallonge de pied 17.

A cette rallonge de pied 17 est fixé un bras de fixation 33 réalisé en métal. Ce bras de fixation 33 comprend un coulisseau 34 et une rallonge de coulisseau 35, apte à coulisser à l'intérieur du coulisseau 34.

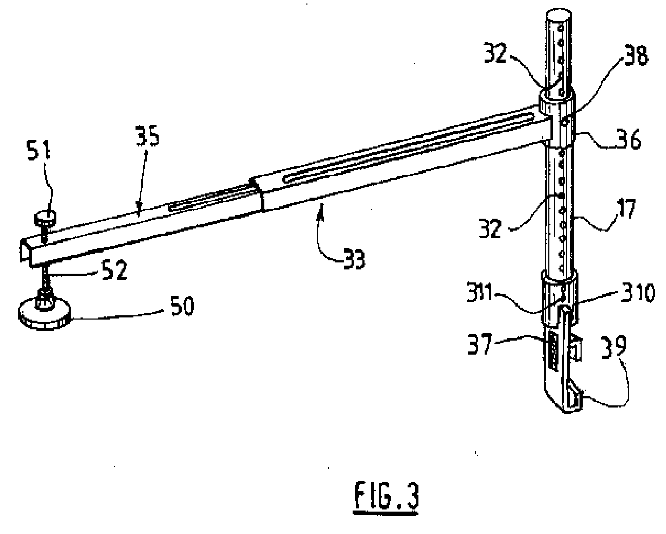

Dans cet exemple, le dispositif de maintien comprend à l'extrémité du coulisseau 34 une bague de guidage 36 apte à être montée sur le tube de la rallonge de pied 17. Cette bague de guidage est percée d'un orifice (référencé 38 sur la figure 3) pour le verrouillage en hauteur

Ainsi, le bras 33 peut-il être inséré sur la rallonge de pied 17. Cette rallonge de pied 17 est percée d'orifices (référencés 32 sur la figure 3) régulièrement espacés les uns des autres, de sorte que le réglage en hauteur de chaque bras 33 peut être effectué au moyen d'une goupille non représentée.

La figure 3 montre de façon plus détaillée un des dispositifs de maintien. Sa platine de fixation 31 présente une section en U dans sa partie inférieure 39, la branche du U ayant une extrémité libre pouvant être reçue dans l'évidement 21 de la couronne circulaire 20.

Une fois cette platine 31 installée de sorte qu'un bord inférieur (référencé 24 sur la figure 2B) de la couronne circulaire 20 soit reçu à l'intérieur de cette partie en U 39, un doigt de fermeture 37 est abaissé, de façon à verrouiller la platine 31 autour de la couronne circulaire 20. Ainsi, la platine 31 peut-elle coulisser le long de la couronne circulaire 20 selon un mouvement de rotation autour d'un axe longitudinal. La platine 21 définit localement une liaison glissière avec la couronne 20. Cette couronne 20 étant circulaire, la platine a un mouvement de rotation autour du dispositif de chargement 10 lorsqu'elle est déplacée.

Pour revenir à la figure 1, le système de distribution comprend en outre trois dispositifs support de capteur 40, dont un seul est représenté sur la figure 1 afin de ne pas trop surcharger la figure.

On peut prévoir davantage de dispositifs support de capteur, par exemple cinq, ou moins de dispositifs supports de capteur, par exemple un seul. De manière générale, dans la présente demande, par « un », on entend « un ou davantage ».

Chaque dispositif support de capteur comprend une platine de fixation correspondante 41, du même type que les platines 31 des dispositifs de maintien 30. Les platines 31, 41 sont réalisées en métal.

Comme illustré par la figure 2A, les platines de fixation 41 des dispositifs support de capteur 40 sont agencées avec un ou plusieurs doigt(s) de fermeture 47 situé dans leur partie inférieure, de sorte que pour fixer ces platines 41 sur la couronne 20, on vient relever ces doigts 47 par un mouvement de coulissement vertical. Des moyens de blocage non représentés, de type vis ou came par exemple, empêchent le doigt 47 de retomber du fait de la gravité.

Les platines 31, 41 comprennent ainsi chacune une partie en U 39, 49, et en vis-à-vis de cette partie en U 39, 49, un ou plusieurs doigt(s) de fermeture 37, 47, monté(s) coulissant sur la platine 31, 41 de façon à pouvoir être rapproché(s) de la partie en U 39, 49.

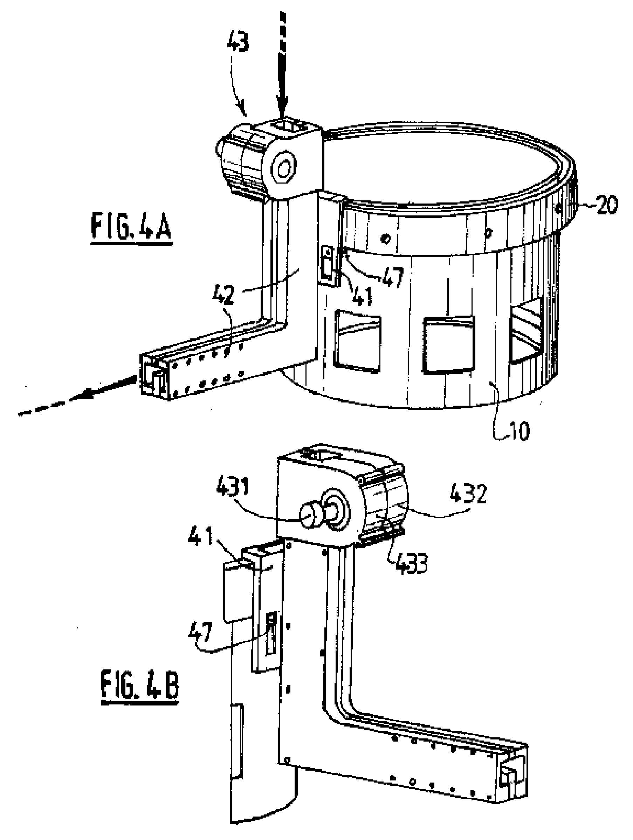

En référence aux figures 4A et 4B, la platine 41 représentée sur ces figures comporte deux doigts, disposés de part et d'autre d'un élément de guidage à forme générale de coude.

Le dispositif support de capteur 40 comprend ainsi un élément de guidage 42 monté sur la platine 41 ainsi qu'un ensemble d'entraînement 43.

L'élément de guidage peut recevoir une chaîne boutante (référencée 45 sur la figure 1), à l'extrémité de laquelle peut être fixé un capteur (référencé 46 sur la figure 1).

La chaine boutante est introduite dans le passage de l'élément de guidage 42 avec un mouvement sensiblement vertical (selon flèche), et ressort avec un mouvement sensiblement radial (selon flèche).

L'ensemble d'entraînement 43 est disposé de façon à pouvoir entraîner la chaîne au travers de l'ensemble de guidage 42.

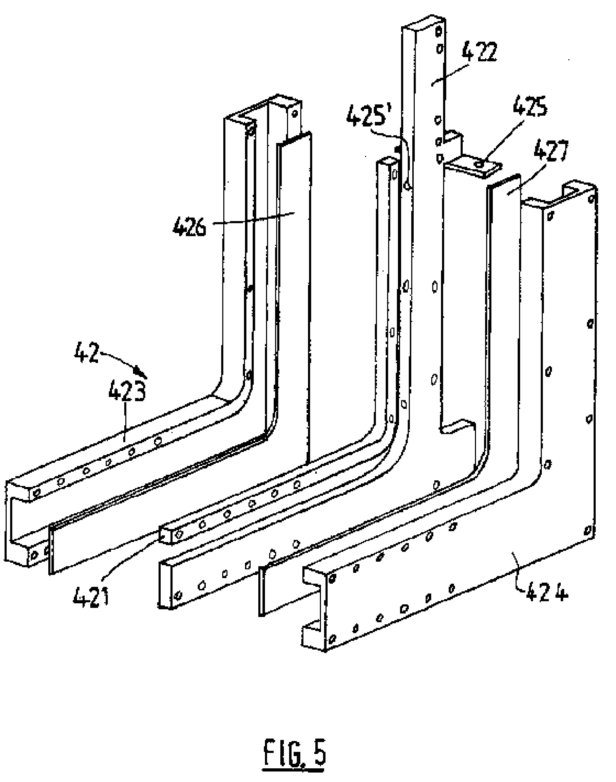

L'ensemble de guidage 42 est monté sur une platine de fixation correspondante 41. Plus précisément, l'ensemble de guidage est solidarisé à la platine de fixation par vissage via des orifices (référencés 425, 425', sur la figure 5) de cet ensemble 42.

En référence à la figure 5, l'ensemble de guidage est obtenu par assemblage de deux guides 421, 422 réalisés en métal. Cet ensemble est agencé pour supporter et guider la chaîne boutante. Cette chaine boutante peut être réalisée en métal.

L'ensemble de guidage comprend un rail de guidage supérieur 421, un rail de guidage inférieur 422, deux carters métalliques de guidage 423, 424 et deux flasques en téflon 426, 427.

Les deux rails 421, 422 permettent de guider des galets des maillons de la chaîne boutante.

Les deux carters 423, 424 ferment latéralement l'ensemble de guidage et assurent la rigidité de l'ensemble. Ces carters 423, 424 permettent avec les flasques de téflon 426, 427 d'assurer le maintien latéral de la chaîne et d'éviter le rotulage pouvant entraîner un blocage de cette chaîne.

L'ensemble de guidage a une forme générale en L, de façon à pouvoir transformer un mouvement de translation vertical de la chaîne boutante en un mouvement de translation horizontal, afin d'ajuster la distance des capteurs au dispositif de chargement.

La partie horizontale de l'ensemble de guidage ou la base du L est conçue de manière à pouvoir en ajuster la longueur par tronçonnage sans en affecter la structure.

Pour revenir aux figures 4A, 4B et 5 (pour la référence 421), l'ensemble d'entraînement 43, solidarisé par vissage au rail inférieur 422 de l'ensemble de guidage 42, comprend un pignon d'entraînement non visible sur les figures, deux entretoises non visibles sur les figures et deux roulements non visibles sur les figures, deux carters 432, 433 et un arbre d'entraînement 431.

Les deux roulements à butée intégrée sont disposés de part et d'autre du pignon d'entrainement, chaque roulement étant espacé de ce pignon grâce à l'entretoise correspondante.

Cet ensemble peut être actionné, par exemple grâce à un outil de type clé à pipe ou manivelle.

Grâce à l'utilisation d'une chaîne boutante et du guidage correspondant, le support de capteur, dont l'encombrement est considérablement réduit lorsque la chaîne est en position verticale parallèle à l'axe longitudinal du réacteur, peut être installé de façon relativement peu contraignante, ce qui peut être particulièrement avantageux lorsque l'environnement impose au contraire certaines contraintes d'encombrement et/ou de manque d'espace.

Il sera à présent décrit un exemple de procédé d'installation d'un système de distribution de particules, selon un mode de réalisation de l'invention.

Initialement, la couronne circulaire 20 est solidarisée au fût 10 du dispositif de chargement, par vissage. Puis l'ensemble fût et couronne est descendu dans le réacteur, via une ouverture dans la partie supérieure du réacteur.

Dans un deuxième temps, des opérateurs amènent les platines de fixation 31, 41 des dispositifs de maintien 30 et des dispositifs support de capteur 40. Ces platines sont fixées sur la couronne 20 de façon à autoriser un coulissement le long de la couronne 20. Un tel système de rail permet des manipulations relativement aisées pour les opérateurs cherchant à positionner les platines 31, 41.

Dans un mode de réalisation, on pourrait prévoir de fixer ces platines 31, 41 avant de descendre le dispositif de chargement dans le réacteur.

Les rallonges de pied 17 sont ensuite installées sur les platines de fixation 31. En référence à la figure 3, chaque platine 31 définit en effet un réceptacle 310, d'une seule pièce avec le corps de la platine 31, pour recevoir une extrémité basse d'une rallonge de pied 17 correspondante. Ce réceptacle 210 définit un orifice 311 pour le verrouillage au moyen d'une goupille non représentée de la rallonge de pied 17 sur la platine 31.

Les bras 33 sont ensuite montés sur ces rallonges de pied 17. L'opérateur peut ajuster les déplacements angulaires de ces bras en déplaçant les platines correspondantes le long des rails de la couronne circulaire 20. En outre, il est possible de modifier la hauteur de ces bras 33 en déplaçant les bagues de guidage 36 le long des rallonges de pied 17.

Ces bras 33 peuvent comprendre à leur extrémité opposée à l'extrémité solidarisée aux rallonges de pied 17 des moyens de fixation au réacteur, par exemple des pieds rotulés 50 destinés à venir se poser sur un plateau du réacteur.

Les opérateurs peuvent ainsi jouer sur la hauteur et l'orientation de ces bras 33, de façon à installer au mieux le dispositif de chargement 10.

En outre, la longueur de ces bras 33 peut être ajustée en faisant coulisser les pièces 34, 35 l'une dans l'autre. Des cames de verrouillage non représentées permettent de verrouiller la rallonge de coulisseau 35 par rapport au coulisseau 34.

Le système de chargement peut en outre comprendre un capteur de niveau non représenté, lequel peut fournir des mesures quant à l'orientation du dispositif de chargement 10 lors de son installation. A partir de ces mesures, les opérateurs peuvent éventuellement repositionner les bras 33 de façon à assurer l'horizontalité du dispositif de chargement 10. Un tel réglage fin peut être effectué au moyen d'une molette de réglage 51, une tige filetée 52 permettant d'ajuster la distance entre le pied rotulé 50 et le coulisseau 35 sur lequel ce pied 50 est monté.

On peut venir installer la bague inférieure 15, la bague supérieure 16, et installer la rehausse 14 sur cette bague supérieure.

Une fois le dispositif de chargement installé et maintenu en place dans le réacteur, les dispositifs support de capteur 40 peuvent être montés. On peut prévoir de monter les ensembles de guidage 42 et les ensembles d'entraînement 43 sur les platines de fixation 41, une fois le dispositif de chargement 10 maintenu en place, ou bien encore préalablement à la descente dans le réacteur, ou autre.

Les dispositifs support de capteur 40 peuvent être installés relativement facilement en insérant des chaînes boutantes 45 correspondantes dans les ensembles d'entraînement 43 et les ensembles de guidage 42. La longueur de ces chaînes boutantes peut être ajustée, en fonction du diamètre du réacteur, et donc du lit de catalyseur à surveiller, en faisant tourner l'arbre d'entraînement 431 de l'ensemble d'entraînement 43.

Enfin, on pourra venir installer des raccordements électriques pour connecter chacun de capteurs à un boitier extérieur, afin que les signaux issus de ces capteurs puissent être lus et traités. On pourra par exemple mettre en oeuvre des fils électriques et des moyens de clipsage de ces fils électriques sur le système de distribution, notamment le long d'au moins une partie de la chaîne boutante, ou tout autre moyen à la portée de l'homme du métier.

## Revendications

1. Système de distribution (1) de particules solides pour charger en particules solides une enceinte, comprenant :
un dispositif de maintien (30) d'un dispositif de chargement (10) en particules solides, ledit dispositif de maintien étant agencé pour assurer le maintien du dispositif de chargement dans l'enceinte, et
un dispositif support de capteur (40), ledit capteur (46) étant destiné à la collecte d'informations sur le chargement de l'enceinte,
et dans lequel
le système de distribution de particules solides est agencé de sorte que le dispositif de maintien et le dispositif support de capteur puissent être montés sur le dispositif de chargement de particules solides tout en étant déplaçables par rapport audit dispositif de chargement.

2. Système de distribution (1) selon la revendication 1, comprenant en outre :
un élément de support (20) solidarisé au dispositif de chargement (10) et agencé de façon à supporter le dispositif de maintien (30) et/ou le dispositif support de capteur (40) de sorte que ledit dispositif de maintien et/ou dispositif support de capteur puisse coulisser le long dudit élément de support.

3. Système de distribution selon la revendication 2, dans lequel l'élément de support comprend une couronne circulaire (20).

4. Système de distribution (1) selon l'une des revendications 2 à 3, comprenant en outre
une platine de fixation (31, 41) solidarisée au dispositif de maintien (30) et/ou au dispositif support de capteur (40) et montée coulissante sur l'élément de support (20).

5. Système de distribution selon l'une des revendications 2 à 4, comprenant en outre
des moyens de verrouillage (37, 47) du dispositif de maintien (30) et/ou dispositif support de capteur (40) sur l'élément de support (20).

6. Système de distribution (1) selon l'une des revendications 1 à 5, comprenant en outre :
des moyens de réglage en hauteur (17, 36) du dispositif de maintien (30) par rapport au dispositif de chargement (10).

7. Système de distribution (1) selon l'une des revendications 1 à 6, dans lequel le dispositif support de capteur (40) comprend un élément d'écartement (45) pour déporter latéralement le capteur par rapport au dispositif de chargement (10).

8. Système selon la revendication 7, dans lequel l'élément d'écartement comprend une chaine boutante (45), et
le dispositif support de capteur comprend un élément de guidage (42) de la chaine boutante, ledit élément de guidage étant agencé de façon à guider ladite chaine boutante de sorte qu'une portion de la chaine à la sortie dudit élément de guidage s'étende suivant une direction différente de celle d'une portion de la chaîne à l'entre de l'élément de guidage.

9. Système selon la revendication 8, dans lequel
l'élément de guidage définit un passage pour recevoir la chaine boutante, ledit passage formant un angle proche de 90°.

10. Procédé d'installation d'un système de distribution de particules solides dans une enceinte, ledit système de distribution de particules solides comprenant un dispositif de maintien d'un dispositif de chargement agencé pour assurer le maintien de ce dispositif de chargement dans l'enceinte, et un dispositif support de capteur, ledit capteur étant destiné à la collecte d'informations sur le chargement de l'enceinte, le procédé comprenant :
une étape de montage du dispositif support de capteur et du dispositif de maintien sur le dispositif de chargement, et
une étape d'ajustement au cours de laquelle on déplace le dispositif support de capteur et le dispositif de maintien par rapport audit dispositif de chargement, afin de s'adapter à l'environnement à l'intérieur de l'enceinte et/ou au diamètre du lit de particules solides qu'on veut surveiller.

## Patentansprüche

1. System zum Verteilen (1) fester Teilchen zum Laden einer Umschließung mit festen Teilchen, das Folgendes umfasst:
eine Haltevorrichtung (30) einer Ladevorrichtung (10) mit festen Teilchen, wobei die Haltevorrichtung angeordnet ist, um das Halten der Ladevorrichtung in der Umschließung zu gewährleisten, und
eine Sensorträgervorrichtung (40), wobei der Sensor (46) für die Erfassung von Informationen über das Laden der Umschließung bestimmt ist,
und wobei
das System zum Verteilen fester Teilchen derart angeordnet ist, dass die Haltevorrichtung und die Sensorträgervorrichtung an der Ladevorrichtung mit festen Teilchen angebracht sein können und gleichzeitig in Bezug zu der Ladevorrichtung verschiebbar sind.

2. System zum Verteilen (1) nach Anspruch 1, das überdies Folgendes umfasst:
ein Trägerelement (20), das fest mit der Ladevorrichtung (10) verbunden ist und derart angeordnet ist, dass es die Haltevorrichtung (30) und/oder die Sensorträgervorrichtung (40) derart trägt, dass die Haltevorrichtung und/oder die Sensorträgervorrichtung entlang des Trägerelements gleiten kann.

3. System zum Verteilen nach Anspruch 2, wobei das Trägerelement einen kreisförmigen Kranz (20) umfasst.

4. System zum Verteilen (1) nach einem der Ansprüche 2 bis 3, das überdies Folgendes umfasst:
eine Befestigungsplatte (31, 41), die fest mit der Haltevorrichtung (30) und/oder mit der Sensorträgervorrichtung (40) verbunden ist und gleitend auf dem Trägerelement (20) angebracht ist.

5. System zum Verteilen nach einem der Ansprüche 2 bis 4, das überdies Folgendes umfasst:
Mittel zur Verriegelung (37, 47) der Haltevorrichtung (30) und/oder der Sensorträgervorrichtung (40) auf dem Trägerelement (20).

6. System zum Verteilen (1) nach einem der Ansprüche 1 bis 5, das überdies Folgendes umfasst:
Mittel zur Höheneinstellung (17, 36) der Haltevorrichtung (30) in Bezug zu der Ladevorrichtung (10).

7. System zum Verteilen (1) nach einem der Ansprüche 1 bis 6, wobei das Sensorträgerelement (40) ein Entfernungselement (45) zum seitlichen Verschieben des Sensors in Bezug zur Ladevorrichtung (10) umfasst.

8. System nach Anspruch 7, wobei:
das Entfernungselement eine Zug-Druck-Kette (45) umfasst, und
die Sensorträgervorrichtung ein Element zur Führung (42) der Zug-Druck-Kette umfasst, wobei das Führungselement derart angeordnet ist, dass es die Zug-Druck-Kette derart führt, dass ein Abschnitt der Kette am Ausgang des Führungselements sich entlang einer Richtung erstreckt, die sich von derjenigen eines Abschnitts der Kette am Eingang des Führungselements unterscheidet.

9. System nach Anspruch 8, wobei:
das Führungselement einen Durchgang zum Aufnehmen der Zug-Druck-Kette definiert, wobei der Durchgang einen Winkel in der Nähe von 90° bildet.

10. Verfahren zur Einrichtung eines Systems zum Verteilen von festen Teilchen in einer Umschließung, wobei das System zum Verteilen von festen Teilchen eine Haltevorrichtung einer Ladevorrichtung, die angeordnet ist, um das Halten dieser Ladevorrichtung in der Umschließung zu gewährleisten, und eine Sensorträgervorrichtung umfasst, wobei der Sensor für die Erfassung von Informationen über das Laden der Umschließung bestimmt ist, wobei das Verfahren Folgendes umfasst:
einen Schritt zur Anbringung der Sensorträgervorrichtung und der Haltevorrichtung auf der Ladevorrichtung, und
einen Anpassungsschritt, während dem die Sensorträgervorrichtung und die Haltevorrichtung in Bezug zu der Ladevorrichtung verschoben werden, um sich an die Umgebung im Inneren der Umschließung und/oder an den Durchmesser des Betts aus festen Teilchen, das überwacht werden soll, anzupassen.

## Claims

1. A solid particle distribution system (1) for charging a chamber with solid particles comprising:
a retention device (30) for a charging device (10) for solid particles, this retention device being arranged so as to ensure the retention of the charging device in the chamber and
a sensor support device (40), the sensor (46) being intended to acquire information relating to the charging of the chamber,
and wherein
the solid particle distribution system is arranged so that the retention device and the sensor support device can be mounted on the solid particle charging device whilst being able to be moved relative to this charging device.

2. The distribution system (1) as claimed in claim 1, further comprising:
a support element (20) which is fixedly joined to the charging device (10) and which is arranged so as to support the retention device (30) and/or the sensor support device (40) so that the retention device and/or the sensor support device can slide along this support element.

3. The distribution system as claimed in claim 2, wherein the support element comprises a circular ring (20).

4. The distribution system (1) as claimed in either of claims 2 and 3, further comprising
a fixing plate (31, 41) which is fixedly joined to the retention device (30) and/or to the sensor support device (40) and which is mounted so as to slide on the support element (20).

5. The distribution system as claimed in one of claims 2 to 4, further comprising
means (37, 47) for locking the retention device (30) and/or the sensor support device (40) on the support element (20).

6. The distribution system (1) as claimed in one of claims 1 to 5, further comprising:
means (17, 36) for adjusting the height of the retention device (30) with respect to the charging device (10).

7. The distribution system (1) as claimed in one of claims 1 to 6, wherein the sensor support device (40) comprises a spacer element (45) in order to laterally offset the sensor relative to the charging device (10).

8. The system as claimed in claim 7, wherein
the spacer element comprises a drive chain (45), et
the sensor support device comprises an element (42) for guiding the drive chain, the guiding element being arranged so as to guide the drive chain so that a portion of the chain at the output of the guiding element extends in a direction different from that of a portion of the chain at the input of the guiding element.

9. The system as claimed in claim 8, wherein
the guiding element defines a passage for receiving the drive chain, the passage forming an angle close to 90°.

10. A method for installing a solid particle distribution system in a chamber, the solid particle distribution system comprising a retention device for a charging device, which retention device is arranged to ensure the retention of the charging device in the chamber, and a sensor support device, this sensor being intended to acquire information relating to the charging of the chamber, the method comprising:
a step of assembling the sensor support device and the retention device on the charging device, and
a step of adjustment during which the sensor support device and the retention device are moved relative to the charging device in order to be adapted to the environment inside the chamber and/or the diameter of the bed of solid particles which it is desirable to monitor.
